# EUROPÄISCHE PATENTSCHRIFT

(11) **EP 1 142 929 B1**
(45) Veröffentlichungstag und Bekanntmachung des Hinweises auf die Patenterteilung: **08.09.2004**
(21) Anmeldenummer: 01107326.9
(22) Anmeldetag: 24.03.2001
(51) Int. Cl.: C08G 77/18, C08G 77/06

(54) **Methoxyfunktionelle Organopolysiloxane, deren Herstellung und Verwendung**
Methoxy-functional organopolysiloxanes, their preparation and their use
Organopolysiloxanes à groupes fonctionnels méthoxy, leur préparation et leur utilisation

(30) Priorität: 06.04.2000 DE 10017212
(43) Veröffentlichungstag der Anmeldung: 10.10.2001
(73) Patentinhaber: Goldschmidt AG, 45127 Essen (DE)
(72) Erfinder: Reusmann, Gerhard, Dr., 45131 Essen (DE)

(56) Entgegenhaltungen:
- EP-A- 0 157 318
- EP-A- 0 557 958
- WO-A-97/11983
- US-A- 3 846 358
- US-A- 5 864 000

## Beschreibung

Die vorliegende Erfindung betrifft die Herstellung methoxyfunktioneller Organopolysiloxane mit enger Molekulargewichtsverteilung bei einem mittleren Molekulargewicht ≤ 2000 g/mol, die der allgemeinen Formel 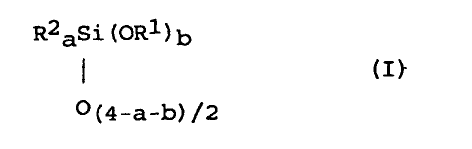 entsprechen, in der R¹ eine Methylgruppe, R² verschieden ist und eine Phenyl- und/oder eine Alkylgruppe mit 1 bis 4 Kohlenstoffatomen bedeutet, a = 1 bis 1,7 und b ≤ 1 ist, sowie deren Verwendung.

In den folgenden Beschreibungen haben Siliconharze, Polysiloxane und Organopolysiloxane sinngemäß die gleiche Bedeutung.

In den deutschen Offenlegungsschriften DE-A-32 14 984 und DE-A-32 14 985 werden Verfahren zur Herstellung von Siliconharzen beschrieben, die unter anderem dadurch gekennzeichnet sind, dass man Alkoxysiloxane der vorgenannten Formel (I), worin R¹ ein niederer Alkylrest mit bis zu 4 Kohlenstoffatomen und R² eine Alkyl- oder Phenylgruppe ist, a = 1,0 bis 1,2 und b = 0,5 bis 1,0 sind, verwendet, mit der Maßgabe, dass mindestens 50 Gew.-% der Formel [R²Si(OR¹)O]ₙ, n = 3 bis 8, entsprechen. Die verwendeten Alkoxysilane sind überwiegend niedermolekular und entstehen aus den entsprechenden Chlorsilanen mit Alkohol/Wasser bei Reaktionstemperaturen von 20 bis 60°C.

In der DE-A-28 28 990 werden zur Herstellung von hitzehärtbaren Siliconharzen ebenfalls Alkoxysilane verwendet, die der oben genannten Formel entsprechen, worin R¹ und R² die angegebene Bedeutung haben und a = 1 bis 1,5 und b = 0,1 bis 0,7 sind.

Die Endeigenschaften der ausgehärteten Siliconharze oder Siliconkombinationsharze werden durch die organischen Reste R² sowie durch das R²/Si-Verhältnis ganz wesentlich mitbestimmt. Daher ist es häufig wünschenswert, neben Organotrichlorsilan auch größere Mengen Diorganodichlorsilan sowie gegebenenfalls Triorganochlorsilan mitzuverwenden. Wegen der unterschiedlichen Reaktivität der Organotrichlorsilane einerseits und der Diorganodichlor- bzw. Triorganochlorsilane andererseits führt die Cohydrolyse/Cokondensation häufig zu einem schwer reproduzierbaren Gemisch von Alkoxysiloxanen, die zwar im Mittel der genannten Formel entsprechen, jedoch hinsichtlich der Zusammensetzung der einzelnen Moleküle und der Verteilung der Molekulargewichte sehr unterschiedlich sind. Solche Siliconharzvorprodukte führen zu ungünstigen Eigenschaften der daraus hergestellten Siliconharze oder Siliconkombinationsharze, wie zum Beispiel langen Härtungszeiten.

Gemäß DE-C-34 12 648 werden solche Silikonharze mit niedrigen mittleren Molekulargewichten und enger Molekulargewichtsverteilung durch Umsetzung von Organotrichlorsilanen, Diorganosiloxanen der Formel RO-[R'₂-SiO-]ₙR sowie gegebenenfalls Triorganochlorsilan bzw. Hexaorganodisiloxan bei Temperaturen > 40°C erhalten.

Zwar umfasst die für die Verfahrensprodukte angegebene allgemeine Formel auch methoxyfunktionelle Polysiloxane, jedoch sind diese nach dem angegebenen Verfahren tatsächlich nicht in der erforderlichen engen Molekulargewichtsverteilung herstellbar.

Beschrieben werden daher ausschließlich ethoxyfunktionelle Polysiloxane.

Ethoxyfunktionelle Organosiloxane sind aufgrund ihrer geringen Reaktivität bei Kondensationsreaktionen nicht für die Formulierung von lufttrocknenden Beschichtungen geeignet. So weisen entsprechende Beschichtungen unzureichende Härten auf. Versucht man aber nach dem beschriebenen Verfahren die reaktiveren methoxyfunktionellen Organopolysiloxane herzustellen, führt dies zu Harzprodukten mit breiter Molekulargewichtsverteilung und teilweise zur Gelbildung, die nicht zur Formulierung von Beschichtungssystemen geeignet sind.

Für die Formulierung von festkörperreichen Lacksystemen ist der Einsatz von niedrigviskosen Bindemitteln essentiell, um eine für die Verarbeitbarkeit notwendige niedrige Viskosität zu erhalten. Entsprechend sind für derartige Beschichtungen Organopolysilxane mit einem mittleren Molekulargewicht zwischen 500 und 2000 g/mol bevorzugt einzusetzen. Bei Molekulargewichten der Organopolysiloxane unterhalb 500 g/mol führt der hohe Anteil an reaktiven Alkoxygruppen zu einer unzureichenden Lagerstabilität des Flüssiglackes, Molekulargewichte oberhalb von 2000 g/mol lassen aufgrund der deutlich höheren Viskositäten nicht die Formulierung von festkörperreichen Lacken zu, aufgrund des deutlich niedrigeren Anteils an reaktiven Alkoxygruppen zeigen die Beschichtungen nach Lufttrocknung unzureichende Härten.

Für die Formulierung von Korrosionsschutzbeschichtungen sind insbesondere Phenylmethylsiliconharze geeignet. Während reine Methylsiliconharze eine unzureichende Kompatibilität zu organischen Bindemitteln, wie zum Beispiel Epoxyharzen, zeigen und es teils zu Separationserscheinungen kommt, sind reine Phenylsiliconharze nicht zur Bildung von Korrosionsbeschichtungen mit ausreichenden Härten geeignet. Für die Korrosionsschutzbeschichtungen sind Phenylmethylsiliconharze bevorzugt geeignet, bei denen das Methyl/Phenyl-Massenverhältnis der Gruppe R² in der Formel (I) von 5 : 95 bis 95 : 5, besonders bevorzugt von 10 : 90 bis 90 : 10 variiert.

Für die Lufttrocknung des Beschichtungssystems ist eine hohe Reaktivität des Siliconharzes notwendig. Nur durch die Verwendung von methoxyfunktionellen Siliconharzen ist die zur Lufttrocknung der Beschichtung bei Temperaturen um 10-30°C erforderte Reaktivität zu erzielen. Die Verwendung von alkoxyfunktionellen Organosiloxanen mit höhermolekularen Alkoxygruppen, beispielsweise Ethoxy- oder Propoxygruppen, führt zu Beschichtungen mit längeren Trocknungszeiten und unzureichenden Härten.

Für die Formulierung von Korrosionsschutz-Beschichtungen mit hohen Festkörperanteilen sind dementsprechend besonders niedrigmolekulare methoxyfunktionelle Phenylmethylsiliconharze mit enger Molekulargewichtsverteilung geeignet.

Derartige methoxyfunktionelle Silikonharze werden durch die Erfindung bereitgestellt.

Der Begriff der möglichst hohen Molekulareinheitlichkeit definiert dabei insbesondere Produkte, deren Individuen bezüglich ihrer Menge einer möglichst engen Gaußschen Verteilung entsprechen. Unter niedrigmolekular sind insbesondere Produkte zu verstehen, deren mittleres Molekulargewicht einen Wert von 2000 g/mol nicht überschreitet. Insbesondere sollen solche Organoalkoxysiloxane hergestellt werden, die ein R²/Si-Verhältnis von 1,0 bis 1,7 aufweisen.

Gegenstand der Erfindung ist ein Verfahren zur Herstellung methoxyfunktioneller Organopolysiloxane, welches dadurch gekennzeichnet ist, dass man die Umsetzung von Silanen der Formel

R²SiX₃,

sowie gegebenenfalls

R² ₂SiX₂,

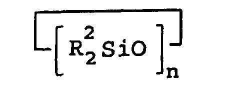

oder

R³O[R² ₂SiO-]ₙR³,

(R²)₃SiX,

(R²)₃Si-O-Si-(R²)₃,

bzw. deren Hydrolysaten,
wobei
X eine hydrolysierbare Gruppe wie Chlor oder ein niedrigmolekularer Alkoholat-Rest mit 1 bis 6 Kohlenstoffatomen ist, und R² und R³ eine Alkylgruppe mit 1 bis 6 Kohlenstoffatomen oder eine Phenylgruppe ist, und n = 1 bis 500 ist, in einer Weise durchführt, dass in einem ersten Schritt das Organotrichlorsilan R²SiX₃ mit der höchsten Reaktivität mit Methanol oder Methanol/Wasser soweit umgesetzt wird, dass 1 bis 2 Äquivalente der hydrolysierbaren Gruppierungen X umgesetzt werden, und in einem zweiten Schritt dem Reaktionsgemisch die weniger reaktiven Silane zugesetzt werden, die dann mit weiterem Methanol/Wasser zum Endprodukt umgesetzt werden.

Derartige niedrigmolekulare methoxyfunktionelle Phenylmethylsiliconharze besitzen besonders vorteilhafte anwendungstechnische Eigenschaften. Daraus formulierte Korrosionsschutzbeschichtungen zeigen hohe Härten und damit gute mechanische Beständigkeiten sowie gute Trocknungsgeschwindigkeiten. Die enge Molekulargewichtsverteilung erlaubt die Formulierung von Lacksystemen mit Festkörpergehalten von 90 bis 100%. Die erfindungsgemäß hergestellten niedrigmolekularen methoxyfunktionellen Phenylmethylsiliconharze finden Verwendung als Lackbestandteil in korrosionsschützenden Beschichtungen.

### Ausführungsbeispiele

### Beispiel 1 - Methoxyfunktionelles Polysiloxan (erfindungsgemäße Herstellung)

112,1 g (0,75 mol) Methyltrichlorsilan werden langsam mit 36,0 g (1,13 mol) Methanol unter Rühren versetzt. Während der Zugabe sinkt die Temperatur auf ca. 0°C. Daraufhin werden 63,5 g (3,0 mol) Phenyltrichlorsilan unter Rühren zugetropft. Dabei erwärmt sich das Reaktionsgemisch auf ca. 35°C. Nach der Phenyltrichlorsilan-Zugabe wird mit 61,2 g einer Mischung aus Methanol/Wasser (Gew.-Verhältnis 2:1, entsprechen 1,3 : 1,1 mol) versetzt und 2 Stunden gerührt. Nach beendeter Zugabe wird das Reaktionsgemisch bei 16 mbar destilliert.

Das Phenylmethylmethoxysiloxan weist die folgenden analytischen Daten auf:
Siliconharz I: Viskosität: 85 mm²/s bei 25°C, Methoxygehalt: 26 Gew.-% (theoretisch: 28 %)

### Beispiel 2 - Ethoxyfunktionelles Polysiloxan (nichterfindungsgemäße Herstellung gemäß DE-C-34 12 648)

211,5 g (1 mol) Phenyltrichlorsilan werden langsam mit 160 g (3,5 mol) Ethanol versetzt. Nun werden 85,5 g Methylethoxypolysiloxan der Formel CH₃SiO_{1,25}(OCH₂H₅)_{0,5} zugesetzt und das Reaktionsgemisch auf 60°C aufgeheizt. Nach 15 Minuten werden 17,1 g (0,95 mol) Wasser tropfenweise zugesetzt. Nach beendeter Wasserzugabe wird das Reaktionsgemisch bei 16 mbar destilliert.

Das Phenylmethylethoxysiloxan weist die folgenden analytischen Daten auf:
Siliconharz II: Viskosität: 95 mm²/s bei 25°C, Ethoxygehalt: 27 Gew.-% (theoretisch 28,2%).

### Beispiel 3 - Methoxyfunktionelles Polysiloxan (nichterfindungsgemäße Herstellung gemäß DE-C-34 12 648)

211,5 g (1 mol) Phenyltrichlorsilan werden langsam mit 112 g (3,5 mol) Methanol versetzt. Nun werden 78,0 g Methylmethoxypolysiloxan der Formel CH₃SiO_{1,25}(OCH₃)_{0,5} zugesetzt und das Reaktionsgemisch auf 60°C aufgeheizt. Nach 15 Minuten werden 17,1 g (0,95 mol) Wasser tropfenweise zugesetzt. Nach beendeter Wasserzugabe wird das Reaktionsgemisch bei 16 mbar destilliert. Man erhält ein uneinheitliches Produkt mit hohem Gelanteil, welches zu keinen einheitlichen Beschichtungen formuliert werden kann.

Die Merkmale der vorliegenden Erfindung werden durch die folgenden Beispiele deutlich. Die in den Formulierungen verwendeten Angaben sind Gewichtsteile.

### Untersuchungsmethoden:

### QUV-Test

Der QUV-Test wurde mit einem Gerät der Firma QUV-Company durchgeführt. Der Test erfolgte über einen Zeitraum von 2000 Stunden bei einem Wechselzyklus von 4 Stunden Bestrahlung und 4 Stunden Kondensation von Wasser. Die Schwarztafeltemperatur betrug 50°C.

### Haftung

Die Haftungs-Prüfung erfolgte durch Gitterschnitttest nach DIN ISO 2409.

### Gilbungsbeständigkeit

Die Gilbung wurde durch Bestimmung des Δ b-Wertes vor und nach QUV-Belastung nach dem Hunter-L a b-System einer weißen Beschichtung bestimmt.

### Glanz

Die Glanzmessung erfolgte nach DIN 67 530.

### Lagerstabilität

Bei der Bestimmung der Lagerstabilität nach 4 Wochen bei 40°C wurden Viskositäts-Stabilität, Trübungen, Separationserscheinungen und die Verarbeitbarkeit beurteilt.

### Härte

Die Bestimmung der Bleistifthärte erfolgte nach ECCA-Norm Nr. 14.

### Korrosionsschutz-Wirkung

Die Korrosionsschutzwirkung wird durch einen Salzsprühtest nach DIN 53167 (für Anstriche; Beschichtungen, Lackierungen) von einem mit der Beschichtung beschichteten Stahlblech (Q-Panel R 46) bestimmt. Dabei werden die Beschichtungen bis zum Metalluntergrund angeritzt und der Grad der Unterwanderung nach 2000 Stunden Salzsprühtest beurteilt.
- 0:: keine Korrosions-Unterwanderung nach Salzsprühtest,
- 1:: maximal 2 mm Korrosions-Unterwanderung nach Salzsprühtest,
- 2:: 2 - 5 mm Korrosions-Unterwanderung nach Salzsprühtest,
- 3:: mehr als 5 mm Korrosions-Unterwanderung nach Salzsprühtest.

### Testformulierungen

Die Zusammensetzung der Testformulierung ist in Tabelle 1 zusammengefasst. Die angegebenen Zahlenwerte beziehen sich auf Mengenangaben in Gramm.

Zur Herstellung des Stammlackes werden die Formulierungsbestandteile 3 bis 9 nacheinander miteinander vermischt und 2 Stunden in einer Perlmühle intensiv vermengt. Danach erfolgt unter Rühren die Zugabe der Komponente 1 bzw. der Komponente 2.

**Tabelle 1:**

| Zusammensetzung der Testformulierungen (Angaben in g) | | | | | |
|---|---|---|---|---|---|
| | | Formulierung I (erf.-gemäß) | Formulierung II (Vergleich) | Formulierung III (erf.-gemäß) | Formulierung IV (Vergleich) |
| Nr. | Stammlack | | | | |
| 1 | Siliconharz I (Bsp. 1) | 34,0 | - | 34,0 | - |
| 2 | Siliconharz II (Bsp. 2) | - | 34,0 | - | 34,0 |
| 3 | ¹ Epoxyharz Epilox M700 | 31,0 | 31,0 | 31,0 | 31,0 |
| 4 | ² Tetraethoxysilan Kieselsäure-ester A29 | 2,2 | 2,2 | - | - |
| 5 | ³ Methyltrimethoxysilan A-163 | - | - | 2,2 | 2,2 |
| 6 | Heliogenblau | 2,0 | 2,0 | 2,0 | 2,0 |
| 7 | Kronos 2059 | 27,0 | 27,0 | 27,0 | 27,0 |
| 8 | Talkum (Mikrotalc) AT extra | 2,0 | 2,0 | 2,0 | 2,0 |
| 9 | Aerosil 380 (Degussa) | 1,0 | 1,0 | 1,0 | 1,0 |

| | Härter | | | | |
|---|---|---|---|---|---|
| 10 | ⁴ AMEO, (3-Aminopropyltriethoxysilan) | 17,0 | 17,0 | 17,0 | 17,0 |

| | | | | | |
|---|---|---|---|---|---|
| *(*¹ *Leuna AG,* ^{*2*} *Wacker AG,* ^{*3*} *Witco OrganoSilicones,* ⁴ *PCR Incorporated, USA)* | | | | | |

Zur Einstellung der Verarbeitungsviskosität kann bei Bedarf Lösemittel wie beispielsweise Ethanol zu der Formulierung gegeben werden.

Vor der Applikation auf das Substrat werden Stammlack und Härter intensiv miteinander vermischt.

Die erhaltenden Testformulierungen werden mit einer Trockenfilmstärke von ca. 120-160 µm auf ein sandgestrahltes Stahlblech, welches mit der Zinkstaubfarbe EP (60 µm) der Firma Feidal (D) beschichtet ist, aufgetragen und 10 Tage bei 25°C getrocknet.

### Anwendungstechnische Prüfung

Die Ergebnisse der anwendungstechnischen Überprüfung der Formulierungen I, II, III und IV sind in Tabelle 2 dargestellt:

**Tabelle 2:**

| Anwendungstechnische Eigenschaften der Testformulierungen | | | | |
|---|---|---|---|---|
| | Formulierung I (erf.-gemäß) | Formulierung II (Vergleich) | Formulierung III (erf.-gemäß) | Formulierung IV (Vergleich) |
| Trockenfilmstärke (µm) | 140 | 140 | 140 | 140 |
| Trocknungszeit (Tage bei 25°C) | 8 | > 20 | 9-10 | > 20 |
| QUV (Bewitterung) Glanz 60° | | | | |
| Kontroll: 5000 Stunden: | 85 81 | 82 55 | 83 78 | 80 58 |
| Härte (Bleistifthärte) | 2H | 3B | HB | 3-4B |
| Gilbung nach 2000 Stunden QUV (Δ b) | 0,02 | 0,03 | 0,02 | 0,03 |
| Haftung auf Untergrund (GtC) | 0 | 1-2 | 0-1 | 1-2 |
| Lagerstabilität Stammlack (4 Wochen 40°C) | i.o. | i.o. | i.o. | i.o. |
| Korrosionsschutz-Wirkung (2000 h) | 0 | 2 | 1 | 2-3 |

| | | | | |
|---|---|---|---|---|
| (i.o.: in Ordnung, n.i.O. nicht in Ordnung) | | | | |

Aus Tabelle 2 wird die Überlegenheit der erfindungsgemäßen Formulierung I deutlich.

Im Vergleich zu Formulierung II, basierend auf dem nicht erfindungsgemäßen Siliconharz II, zeigt Formulierung I deutlich kürzere Trocknungszeiten und deutlich höhere Härten. Ebenso ist die Korrosionsschutzwirkung deutlich verbessert.

Aus dem Vergleich der erfindungsgemäßen Formulierungen I und III (analog WO 96/16109) wird überdies die Überlegenheit von Korrosionsschutzlackierungen bei Verwendung von Tetraalkoxysilanen im Vergleich zu Trialkoxysilanen, wie sie im Patent WO 96/16109 beschrieben sind, deutlich. So wird nach 8 Tagen Lufttrocknung bei 25 °C eine verbesserte Korrosionsschutzwirkung und eine verbesserte Haftung zum Untergrund gefunden.

Somit können durch Verwendung des erfindungsgemäßen Siliconharzes I und der Verwendung von Tetraalkoxysilanen besonders vorteilhafte Beschichtungseigenschaften erreicht werden.

Die erfindungsgemäße Beschichtung kann durch eine Einschichtlackierung beispielsweise durch Rollen, Versprühen oder Tauchen aufgetragen werden und zeigt somit Verarbeitungsvorteile zu den, dem Fachmann bekannten und allgemein gebräuchlichen Zweischicht Epoxy-Polyurethan-Beschichtungen.

## Patentansprüche

1. Verfahren zur Herstellung von methoxyfunktionellen Organopolysiloxanen mit enger Molekulargewichtsverteilung bei einem mittleren Molekulargewicht (MW) ≤ 2000 g/mol, die der allgemeinen Formel 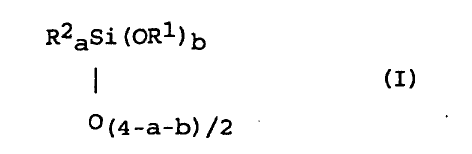 entsprechen, in der
R¹ eine Methylgruppe ist,
R² den Phenylrest oder Alkylreste mit 1 bis 4 Kohlenstoffatomen bedeutet, wobei die Reste gleich oder verschieden sein können,
a = 1 bis 1,7 und
b ≤ 1 ist,
wobei mindestens 80% der Polysiloxane ein Molekulargewicht zwischen 800 und 2000 g/mol aufweisen,, **dadurch gekennzeichnet, dass** man die Umsetzung von Silanen der Formel
R²SiX₃,
sowie gegebenenfalls
R² ₂SiX₂, 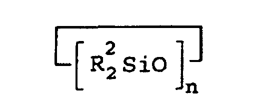
oder
R³O[R² ₂SiO-]ₙR³,
(R²)₃SiX,
(R²)₃Si-O-Si-(R²)₃,
bzw. deren Hydrolysaten,
wobei
X eine hydrolysierbare Gruppe wie Chlor oder ein niedrigmolekularer Alkoholat-Rest mit 1 bis 6 Kohlenstoffatomen ist, und
R² und R³ eine Alkylgruppe mit 1 bis 6 Kohlenstoffatomen oder eine Phenylgruppe ist, und n = 1 bis 500 ist,
in einer Weise durchführt, **dass** in einem ersten Schritt das Organotrichlorsilan R²SiX₃ mit der höchsten Reaktivität mit Methanol oder Methanol/Wasser soweit umgesetzt wird, **dass** 1 bis 2 Äquivalente der hydrolysierbaren Gruppierungen X umgesetzt werden, und in einem zweiten Schritt dem Reaktionsgemisch die weniger reaktiven Silane zugesetzt werden, die dann mit weiterem Methanol/Wasser zum Endprodukt umgesetzt werden.

## Revendications

1. Procédé pour la préparation d' organopolysiloxanes à fonctionnalité méthoxy présentant une distribution étroite des poids moléculaires, présentant un poids moléculaire moyen (MW) ≤ 2000 g/mole, qui correspondent à la formule générale 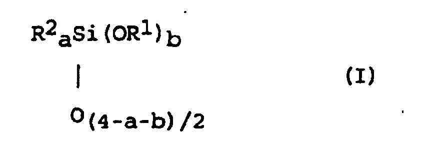 dans laquelle
R¹ est un groupe méthyle,
R² signifie le radical phényle ou des radicaux alkyle comprenant 1 à 4 atomes de carbone, les radicaux pouvant être identiques ou différents,
a = 1 à 1,7 et
b ≤ 1,
au moins 80% des polysiloxanes présentant un poids moléculaire entre 800 et 2000 g/mole, **caractérisé en ce qu'**on réalise la transformation de silanes de formule
R²SiX₃,
ainsi que, le cas échéant
R² ₂SiX₂, 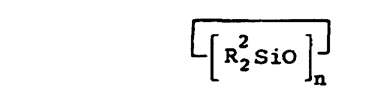
ou
R³O[R² ₂SiO-]ₙR³,
(R²)₃SiX,
(R²)₃Si-O-Si-(R²)₃,
ou leurs hydrolysats,
où
X représente un groupe hydrolysable tel que le chlore ou un radical alcoolate de bas poids moléculaire comprenant 1 à 6 atomes de carbone et R² et R³ représentent un groupe alkyle comprenant 1 à 6 atomes de carbone ou un groupe phényle et n = 1 à 500,
de telle manière, que dans une première étape, l'organotrichlorosilane R²SiX₃ présentant la réactivité la plus élevée est transformé avec du méthanol ou un mélange méthanol/eau jusqu'à ce que 1 à 2 équivalents des groupes hydrolysables X aient été transformés et, dans une deuxième étape, on ajoute au mélange réactionnel les silanes moins réactifs qui sont alors transformés avec un mélange supplémentaire méthanol/eau en produit fini.

## Claims

1. A process for preparing methoxy-functional organopolysiloxanes having a narrow molecular weight distribution with an average molecular weight (MW) ≤ 2000 g/mol and of the general formula 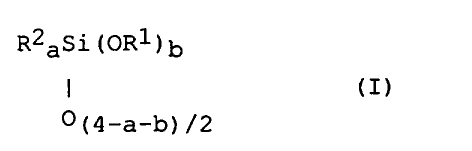 where
R¹ is a methyl group,
R² denotes the phenyl radical or alkyl radicals having 1 to 4 carbon atoms, it being possible for the radicals to be identical or different, a is from 1 to 1.7 and b ≤ 1,
at least 80% of the polysiloxanes having a molecular weight of between 800 and 2000 g/mol, **characterized in that** the reaction of silanes of the formula
R²SiX₃
and, if desired,
R² ₂SiX₂, 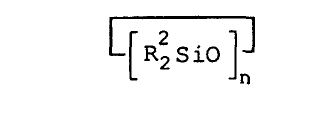
or
R³O[R² ₂SiO-]ₙR³,
(R²)₃SiX,
(R²)₃Si-O-Si-(R²)₃,
and/or their hydrolysates,
where
X is a hydrolysable group such as chlorine or a low molecular mass alkoxide residue having 1 to 6 carbon atoms, and
R² and R³ are each an alkyl group having 1 to 6 carbon atoms or are each a phenyl group, and n is from 1 to 500,
is carried out such that in a first step the organotrichlorosilane R²SiX₃ with the greatest reactivity is reacted with methanol or methanol/water to an extent such that from 1 to 2 equivalents of the hydrolysable groups X are reacted, and in a second step the less reactive silanes are added to the reaction mixture and are then reacted with further methanol/water to give the end product.
